# EUROPÄISCHE PATENTANMELDUNG

(11) **EP 4 410 595 A1**
(43) Veröffentlichungstag der Anmeldung: **07.08.2024**
(21) Anmeldenummer: 23211811.7
(22) Anmeldetag: 23.11.2023
(51) Int. Cl.: B60N 2/16, B60N 2/18, B60N 2/02, B60N 2/90

(54) **VERSTELLVORRICHTUNG UND FAHRZEUGSITZ MIT VERSTELLVORRICHTUNG**

(30) Priorität: 31.01.2023 DE 102023200778
(71) Anmelder: Adient US LLC, Plymouth, MI 48170 (US)
(72) Erfinder: KUNTZ, Oliver, 42929 Wermelskirchen (DE); HO, Van-Toan, 42653 Solingen (DE); SCHLÜTER, Frank, 47447 Moers (DE)
(74) Vertreter: Liedtke & Partner Patentanwälte

(57) **Zusammenfassung**

Die Erfindung betrifft eine Höhenverstelleinrichtung (122, 1220) für ein Bauteil eines Fahrzeugsitzes (100), umfassend zumindest eine Antriebseinheit (126) mit einem Motor (128) und zwei Höhenverstelleinheiten (129), wobei jeweils zwischen jeder Höhenverstelleinheit (129) und dem Motor (128) eine Welle (132) angeordnet ist, durch die eine Drehung des Motors (128) auf die jeweilige Höhenverstelleinheit (129) übertragbar ist.

## Beschreibung

Die Erfindung betrifft eine als Höhenverstelleinrichtung ausgebildete Verstellvorrichtung zum Verstellen eines Bauteils eines Fahrzeugsitzes sowie einen Fahrzeugsitz mit einer solchen Höhenverstelleinrichtung.

### Stand der Technik

Verstellvorrichtungen zum Verstellen eines Bauteils eines Fahrzeugsitzes, zum Beispiel einer Rückenlehne oder eines Sitzteils, sind allgemein bekannt. Sowohl für Fahrzeugsitz-Höheneinsteller als auch für Lehneneinsteller sind Antriebsvorrichtungen zur Bedienung und Einstellung einer Sitzfunktion bekannt. Hierbei handelt es sich häufig um elektrische Antriebe oder mechanische, bidirektionale Schrittschaltwerke. Derartige Mechanismen sind als lastaufnehmende Systeme in Höheneinstellern üblich. Bei der Anwendung als Lehneneinsteller übernimmt in der Regel der angetriebene, als Getriebebeschlag ausgebildete, Lehnenbeschlag die Gebrauchslasten und Crashlasten. Bekannte Antriebsvorrichtungen sind beispielsweise in der DE 197 09 852 A1 und DE 195 40 631 A1 offenbart.

### Aufgabe

Der Erfindung liegt die Aufgabe zu Grunde, eine Höhenverstelleinrichtung der eingangs genannten Art zu verbessern, insbesondere diese kompakt und einfach auszugestalten, sowie einen entsprechenden Fahrzeugsitz bereitzustellen.

### Lösung

Die erstgenannte Aufgabe wird erfindungsgemäß durch eine Höhenverstelleinrichtung für ein Bauteil eines Fahrzeugsitzes mit den Merkmalen des Anspruchs 1 gelöst.

Die zweitgenannte Aufgabe wird erfindungsgemäß durch einen Fahrzeugsitz mit den Merkmalen des Anspruchs 9 gelöst.

Vorteilhafte Weiterbildungen sind Gegenstand der abhängigen Ansprüche.

Die erfindungsgemäße als Höhenverstelleinrichtung ausgebildete Verstellvorrichtung zum Einstellen eines Bauteils des Fahrzeugsitzes umfasst zumindest eine Antriebseinheit mit einem Motor und zwei Spindeleinheiten, wobei jeweils zwischen einem der Spindelantriebe und dem Motor eine Welle, insbesondere eine Antriebswelle, angeordnet ist, durch die eine Drehung des Motors auf die jeweilige Spindeleinheit, insbesondere auf eine Gewindespindel (auch Stellgewinde genannt) oder eine Spindelmutter (auch Stellmutter genannt), übertragbar ist.

Mit anderen Worten: Die erfindungsgemäße Höhenverstelleinrichtung kann zumindest eine Antriebseinheit mit einem Motor und zwei Höhenverstelleinheiten umfassen, wobei jeweils zwischen einem der Höhenverstelleinheiten und dem Motor eine Welle angeordnet ist, durch die eine Drehung des Motors auf die jeweilige Höhenverstelleinheit übertragbar ist.

Die mit der Erfindung erzielten Vorteile bestehen insbesondere darin, dass bei einer solch einfach aufgebauten Höhenverstelleinrichtung mit nur einem einzigen Motor für zwei Höhenverstelleinheiten der Bauraumbedarf der Höhenverstelleinrichtung reduziert und ein Freiraum unterhalb eines Sitzteils des Fahrzeugsitzes optimiert ist. Zudem ist die Anzahl der Komponenten der Höhenversteilleinrichtung reduziert.

Bevorzugt ist die Welle als eine flexible Welle ausgebildet.

Die jeweilige Höhenverstelleinheit kann beispielsweise eine Spindeleinheit umfassen, wobei der Motor beidseitig über die jeweilige Welle direkt mit der zugehörigen Spindeleinheit wirkverbunden, insbesondere bewegungsgekoppelt, ist. Alternativ kann die jeweilige Höhenverstelleinheit zusätzlich eine Getriebeeinheit umfassen, wobei der Motor beidseitig über die jeweilige Welle und indirekt über die Getriebeeinheit mit der zugehörigen Spindeleinheit wirkverbunden, insbesondere bewegungsgekoppelt, ist.

Die Verstellung, insbesondere eine Höhenverstellung, des Bauteils, zum Beispiel des Fahrzeugsitzes, insbesondere von zwei Sitzrahmenteilen des Fahrzeugsitzes, kann mittels der Spindeleinheiten, insbesondere einer Gewindespindel (auch Stellspindel genannt), die in einer feststehenden Spindelmutter läuft, oder einer Spindelmutter (auch Stellmutter genannt), die eine feststehende Gewindespindel umgreift und entlang dieser bewegbar ist, erfolgen. Mit anderen Worten: Die Gewindespindel kann feststehend und die Spindelmutter antreibbar und auf der Gewindespindel bewegbar angeordnet sein. Alternativ kann die Spindelmutter fest und die Gewindespindel drehbar ausgebildet sein.

Die Spindeleinheit kann beispielsweise einerseits an einem Sitzbodenteil und andererseits an einem beweglichen Sitzteil oder an der mit diesem Sitzteil fest verbundenen Getriebeeinheit angelenkt sein. Die beiden Spindeleinheiten können mittels einer Quertraverse miteinander verbunden sein. Die Quertraverse kann darüber hinaus beispielsweise als Motorbrücke ausgebildet sein.

Der Motor, insbesondere ein Elektromotor, kann in der Motorbrücke angeordnet und gehalten sein. Die Motorbrücke kann zwischen zwei Sitzrahmenteilen des Fahrzeugsitzes angeordnet sein und diese miteinander verbinden. Der Motor ist bevorzugt mittig in der Motorbrücke angeordnet. Beidseits des Motors können Führungskanäle oder Wellenkanäle in der Motorbrücke zur Aufnahme jeweils eines flexiblen Wellenabschnitts vorgesehen sein.

Die als Motorbrücke ausgebildete Quertraverse kann beispielsweise einen mittleren Aufnahmeabschnitt zur Aufnahme und Halterung des Motors und zwei daran angrenzende Seitenabschnitte zur Aufnahme und Halterung der Wellen aufweisen. Dabei kann die Motorbrücke als ein nach oben hin offenes Profil ausgebildet sein.

Dadurch, dass die Antriebseinheit nur einen Motor und zwei Spindeln umfasst, ist der Höhenversteller kompakt und einfach aufgebaut, so dass die Verstellvorrichtung platzsparend ausgebildet ist.

Der erfindungsgemäße Fahrzeugsitz umfasst zumindest die zuvor beschriebene Höhenverstelleinrichtung zum Einstellen des Bauteils, insbesondere des Sitzteils des Fahrzeugsitzes. Der Fahrzeugsitz kann insbesondere zwei Sitzrahmenseiten umfassen, die mittels der Höhenverstelleinrichtung miteinander gekoppelt oder verbunden sind.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht eines ersten Ausführungsbeispiels einer als Höhenverstelleinrichtung ausgebildeten erfindungsgemäßen Verstelleinrichtung,
- Fig. 3:: eine weitere perspektivische Ansicht der als Höhenverstelleinrichtung ausgebildeten Verstelleinrichtung im eingebauten Zustand,
- Fig. 4:: eine vergrößerte perspektivische Ansicht der Höhenverstelleinrichtung gemäß Figur 3 im Detail und
- Fig. 5:: eine perspektivische Ansicht eines zweiten Ausführungsbeispiels einer als Höhenverstelleinrichtung ausgebildeten erfindungsgemäßen Verstelleinrichtung.

Einander entsprechende Teile sind in allen Figuren mit den gleichen Bezugszeichen versehen.

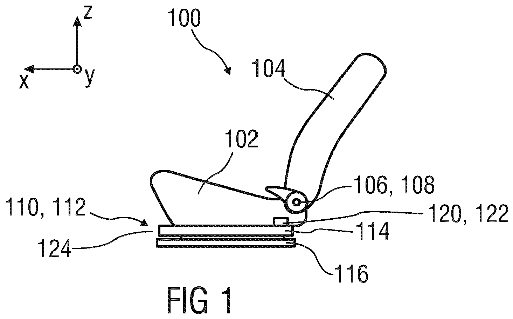

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Des Weiteren kann der Fahrzeugsitz 100 eine weitere Verstellvorrichtung 120 umfassen, welche als eine Höhenverstelleinrichtung 122 ausgebildet ist. Die Verstellvorrichtung 120 ist einerseits mit dem Sitzteil 102 und andererseits mit einem Sitzbodenteil 124, insbesondere der Schienenanordnung 112, verbunden. Das Sitzteil 102 kann zur Höhenverstellung an einem Ende schwenkbar gelagert sein und am gegenüberliegenden Ende mit der Verstellvorrichtung 120 versehen sein. Alternativ kann an jedem Ende des Sitzteils 102 eine Verstellvorrichtung 120 vorgesehen sein.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

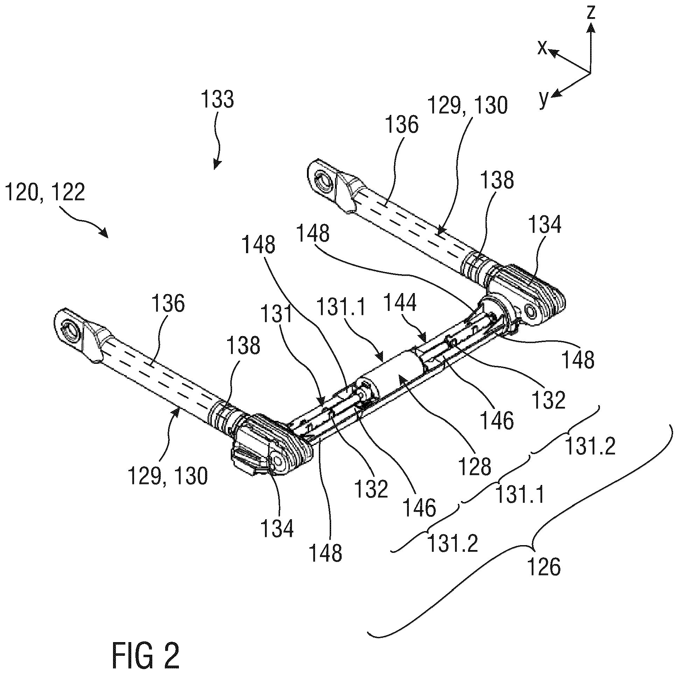

Figur 2 zeigt die als Höhenverstelleinrichtung 122 ausgebildete Verstellvorrichtung 120 im Detail. Die Höhenverstelleinrichtung 122 ist insbesondere in Längsrichtung x gesehen im hinteren Bereich des Fahrzeugsitzes 100 (dargestellt in Figur 1) angeordnet.

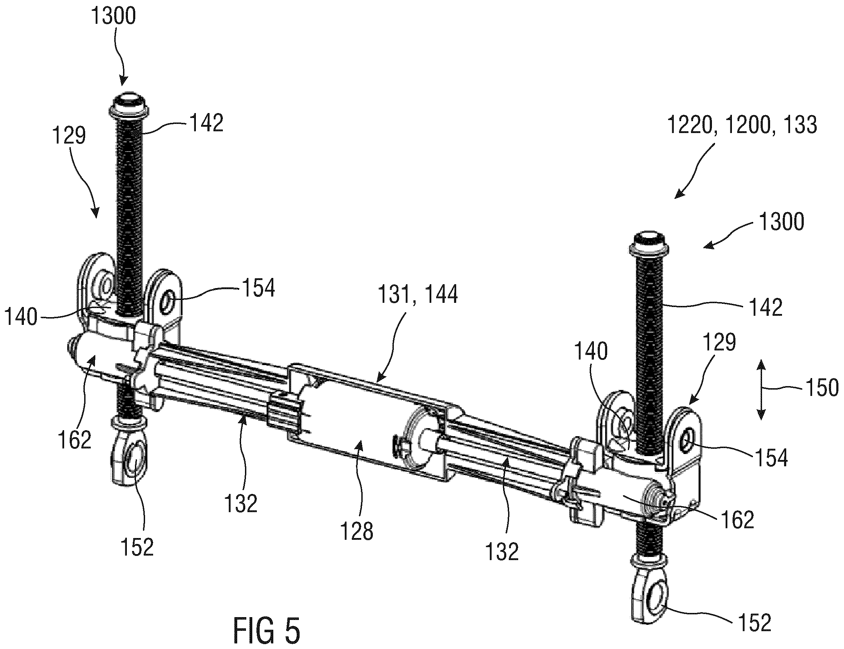

Die Höhenverstelleinrichtung 122 zum Einstellen eines Bauteils, zum Beispiel des Sitzteils 102, des Fahrzeugsitzes 100 umfasst zumindest eine Antriebseinheit 126 mit einem Motor 128, zum Beispiel einem Elektromotor, und zwei Höhenverstelleinheiten 129. Die jeweilige Höhenverstelleinheit 129 kann als eine Spindeleinheit 130 ausgebildet sein. Jeweils zwischen einem der Spindeleinheiten 130 und dem Motor 128 ist eine Welle 132, insbesondere eine Antriebswelle, angeordnet. Eine Drehung des Motors 128 kann dabei auf die jeweilige Spindeleinheit 130, insbesondere auf eine Gewindespindel 136 (auch Stellgewinde genannt, erstes Ausführungsbeispiel nach Figuren 2 bis 4) oder eine Spindelmutter 140 (auch Stellmutter genannt, zweites Ausführungsbeispiel nach Figur 5), übertragbar sein.

Der Motor 128 weist zwei Drehrichtungen auf. Jede Betätigung und damit jede Drehung des Motors 128 hat eine Drehung der beiden Spindeleinheiten 130 und damit eine Höhenverstellung nach oben oder unten zur Folge. Zwischen dem Motor 128 und den Spindeleinheiten 130 kann jeweils eine Getriebeeinheit 134 angeordnet sein. Mittels der Getriebeeinheiten 134 sind verschiedene Übersetzungsverhältnisse einstellbar. Alternativ kann die jeweilige Welle 132 direkt mit der zugehörigen Spindeleinheit 130 gekoppelt, insbesondere wirkverbunden oder bewegungsgekoppelt, sein.

Bevorzugt ist die Welle 132 als eine flexible Welle ausgebildet. Die Verstellung, insbesondere eine Höhenverstellung, des Bauteils, zum Beispiel des Fahrzeugsitzes 100, kann mittels der Spindeleinheiten 130, insbesondere einer antreibbaren Gewindespindel 136 (auch Stellspindel oder Drehspindel genannt), die in einer feststehenden Spindelmutter 138 läuft (dargestellt in Figuren 2 bis 4) oder einer antreibbaren Spindelmutter 140 (auch Stellmutter oder Drehmutter genannt), die eine feststehende Gewindespindel 142 umgreift und entlang dieser bewegbar ist (dargestellt in Figur 5), erfolgen.

Die beiden Spindeleinheiten 130 sind mittels einer Quertraverse 131 miteinander verbunden. Die Quertraverse 131 kann als eine Motorbrücke 144 ausgebildet sein.

Der Motor 128, insbesondere ein Elektromotor, kann in der Motorbrücke 144 angeordnet und gehalten sein. Der Motor 128 ist bevorzugt mittig in der Motorbrücke 144 angeordnet. Beidseits des Motors 128 können Führungskanäle 146 zur Aufnahme jeweils der beidseitig angeordneten flexiblen Wellen 132 und/oder Versteifungselemente 148 in der Motorbrücke 144 vorgesehen sein. Mit anderen Worten: Die als Motorbrücke 144 ausgebildete Quertraverse 131 umfasst einen mittleren Aufnahmeabschnitt 131.1 zur Aufnahme und Halterung des Motors 128 und zwei daran angrenzende Seitenabschnitte 131.2 zur Aufnahme und Halterung der Wellen 132.

Dadurch, dass die Antriebseinheit 126 nur einen einzigen Motor 128 und zwei Spindeleinheiten 130 umfasst, ist die Höhenverstelleinrichtung 122 kompakt und einfach aufgebaut und somit platzsparend ausgebildet.

Die Komponenten, insbesondere die zwei Spindeleinheiten 130, die Motorbrücke 144, der Motor 128 und die beiden Wellen 132, der Höhenverstelleinrichtung 122 können zu einer Montageeinheit 133 vormontiert sein, wie in Figur 2 dargestellt.

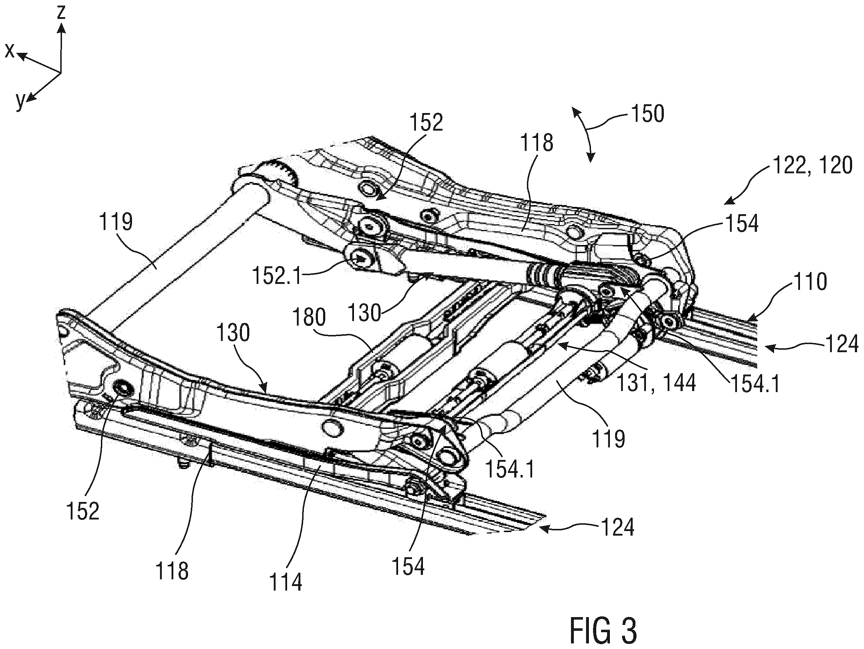

Figur 3 zeigt eine weitere perspektivische Ansicht der Höhenverstelleinrichtung 122 gemäß erstem Ausführungsbeispiel im eingebauten Zustand.

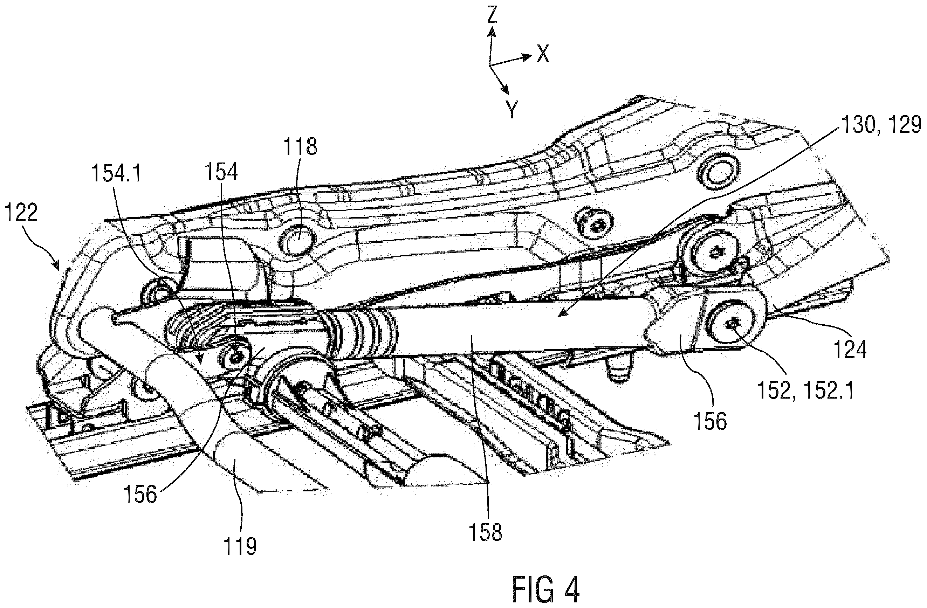

Der Fahrzeugsitz 100 umfasst zwei Sitzrahmenteile 118, von denen in Figur 4 nur eines gezeigt ist. Die beiden Sitzrahmenteile 118 sind mittels der als Motorbrücke 144 ausgebildeten Quertraverse 131 miteinander verbunden.

Die beiden Sitzrahmenteile 118 können optional in bekannter Weise mittels mindestens eines als Querrohr ausgebildeten Rohres 119 miteinander verbunden sein.

Die Sitzrahmenteile 118 dienen der Befestigung und Halterung des Sitzteils 102 an einem Sitzbodenteil 124. Im gezeigten Ausführungsbeispiel ist das Sitzbodenteil 124 als eine Schienenanordnung 112 einer Längsverstelleinrichtung 110 ausgebildet. Die Sitzrahmenteile 118 sind insbesondere an der jeweiligen Oberschiene 114 der Schienenanordnung 112 befestigt.

Die Motorbrücke 144 ist zwischen den zwei Sitzrahmenteilen 118 angeordnet und verbindet diese miteinander. Da der Fahrzeugsitz 100 nach Figur 2 auch die Längsverstelleinrichtung 110 umfasst, welche motorisch angetrieben ist, ist eine weitere Motorbrücke 180 für die Längsverstelleinrichtung 110 zwischen den zwei Oberschienen 114 angeordnet. Alternativ kann diese Längsverstelleinrichtung 110 entfallen und ein ortsfestes Sitzbodenteil 124 vorgesehen sein.

Die Höhenverstelleinrichtung 122 ist zwischen dem Sitzbodenteil 124 und dem Sitzteil 102, insbesondere den Sitzrahmenteilen 118, angeordnet. Das Sitzteil 102 ist mittels der Höhenverstelleinrichtung 122 relativ zum Sitzbodenteil 124, insbesondere der Schienenanordnung 112, verstellbar, insbesondere höhenverstellbar oder höhenbewegbar, zum Beispiel schwenkbar oder schräg bewegbar.

Ein Ausgang (auch Abtrieb genannt) des Motors 128 der Höhenverstelleinrichtung 122 ist beidseitig jeweils mit der flexiblen oder biegsamen Welle 132 verbunden. Die jeweilige Welle 132 ist in sich drehfest und kann damit Momente möglichst winkelgenau übertragen. Die jeweilige Welle 132 ist drehfest mit der antreibbaren Gewindespindel 136 (dargestellt in Figur 2) verbunden. Die antreibbare Gewindespindel 136 stützt sich an der starr gehaltenen oder feststehenden Spindelmutter 138 (dargestellt in Figur 2) ab, so dass Drehbewegungen der antreibbaren Gewindespindel 136, generiert durch Drehungen des zwei Drehrichtungen aufweisenden Motors 128, zu einer Höhenverstellung gemäß Pfeil 150 des Sitzteils 102 führen.

Die jeweilige Spindeleinheit 130 ist einerseits an einem ersten Anlenkpunkt 152 an dem Sitzbodenteil 124 und andererseits an einem zweiten Anlenkpunkt 154 am Sitzteil 102 oder an einer mit diesem Sitzteil 102 fest verbundenen Komponente angeordnet, insbesondere angelenkt. Der erste Anlenkpunkt 152 ist beispielsweise als ein Drehlager 152.1 ausgebildet. Der zweite Anlenkpunkt 154 kann beispielsweise als ein Gelenkmechanismus, zum Beispiel ein Kniehebelmechanismus 154.1, ausgebildet sein.

Figur 4 zeigt eine vergrößerte perspektivische Ansicht der Höhenverstelleinrichtung 122 gemäß Figur 3 im Detail.

Beispielsweise kann die Höhenverstelleinrichtung 122 mittels einer Halterung 156 an dem als Querrohr des Fahrzeugsitzes 100 ausgebildeten Rohr 119 gelenkig befestigt, insbesondere mittels des Kniehebelmechanismus 154.1 angelenkt, sein.

Die Spindeleinheit 130 umfasst ein stabiles Spindelgehäuse 158, welches an den Anlenkpunkten 152 und 154 über Halterungen 156 mit dem Sitzbodenteil 124 oder dem Sitzrahmenteil 118 oder dem Rohr 119 befestigt ist.

Mittels der Höhenverstelleinrichtung 122 ist das Sitzteil 102 gegenüber dem Sitzbodenteil 124 in der Höhe verstellbar.

Figur 5 zeigt eine perspektivische Ansicht eines zweiten Ausführungsbeispiels einer als Höhenverstelleinrichtung 1220 ausgebildeten erfindungsgemäßen Verstelleinrichtung 1200. Auch die Höhenverstelleinrichtung 1220 kann zu einer Montageeinheit 133 vormontiert sein.

Das zweite Ausführungsbeispiel unterscheidet sich nur in dem Aufbau der Spindeleinheit 1300 und der Kopplung mit dem Motor 128.

Die Spindeleinheit 1300 umfasst eine antreibbare Spindelmutter 140 (auch Stellmutter oder Drehmutter genannt), die eine feststehende Gewindespindel 142 umgreift und entlang dieser Gewindespindel 142 zur Höhenverstellung gemäß Pfeil 150 bewegbar ist (dargestellt in Figur 5). Der Motor 128 ist beidseitig über die flexiblen Wellen 132 direkt mit den Spindelantriebseinheiten 162 gekoppelt. Die Spindelantriebseinheiten 162 und die feststehende Gewindespindel 142 können in analoger Art und Weise an den Anlenkpunkten 152 und 154 der Höhenverstelleinrichtung 122 über Halterungen 156 mit dem Sitzbodenteil 124 oder dem Sitzrahmenteil 118 oder dem Rohr 119 (dargestellt in Figuren 3 und 4) befestigt sein.

Der Motor 128 ist in analoger Art und Weise mittig in der als Quertraverse 131 ausgebildeten Motorbrücke 144 angeordnet und gehalten.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 118: Sitzrahmenteil
- 119: Rohr
- 120, 1200: Verstellvorrichtung
- 122, 1220: Höhenverstelleinrichtung
- 124: Sitzbodenteil
- 126: Antriebseinheit
- 128: Motor
- 129: Höhenverstelleinheit
- 130, 1300: Spindeleinheit
- 131: Quertraverse
- 131.1: mittlerer Aufnahmeabschnitt
- 131.2: Seitenabschnitt
- 132: Welle
- 133: Montageeinheit
- 134: Getriebeeinheit
- 136: antreibbare Gewindespindel
- 138: feststehende Spindelmutter
- 140: antreibbare Spindelmutter
- 142: feststehende Gewindespindel
- 144: Motorbrücke
- 146: Führungskanal
- 148: Versteifungselement
- 150: Pfeil
- 152: erster Anlenkpunkt
- 152.1: Drehlager
- 154: zweiter Anlenkpunkt
- 154.1: Kniehebelmechanismus
- 156: Halterung
- 158: Spindelgehäuse
- 162: Spindelantriebseinheit

- 180: weitere Motorbrücke

- x: Längsrichtung
- y: Querrichtung
- z: Vertikalrichtung

## Patentansprüche

1. Höhenverstelleinrichtung (122, 1220) für ein Bauteil eines Fahrzeugsitzes (100), umfassend zumindest eine Antriebseinheit (126) mit einem Motor (128) und zwei Höhenverstelleinheiten (129),
wobei jeweils zwischen einem der Höhenverstelleinheiten (129) und dem Motor (128) eine Welle (132) angeordnet ist, durch die eine Drehung des Motors (128) auf die jeweilige Höhenverstelleinheit (129) übertragbar ist.

2. Höhenverstelleinrichtung (122, 1220) nach Anspruch 1,
wobei die jeweilige Welle (132) als eine flexible Welle ausgebildet ist.

3. Höhenverstelleinrichtung (122, 1220) nach Anspruch 1 oder 2,
wobei die jeweilige Höhenverstelleinheit (129) eine Spindeleinheit (130, 1300) umfasst und der Motor (128) beidseitig über die jeweilige Welle (132) direkt mit der zugehörigen Spindeleinheit (130, 1300) bewegungsgekoppelt ist.

4. Höhenverstelleinrichtung (122, 1220) nach Anspruch 1 oder 2,
wobei die jeweilige Höhenverstelleinheit (129) zusätzlich eine Getriebeeinheit (134) umfasst und der Motor (128) beidseitig über die jeweilige Welle (132) indirekt über die Getriebeeinheit (134) mit der Spindeleinheit (130, 1300) bewegungsgekoppelt ist.

5. Höhenverstelleinrichtung (122, 1220) nach Anspruch 3 oder 4,
wobei die Spindeleinheit (130, 1300) einerseits an einem Sitzbodenteil (124) und andererseits an einem beweglichen Sitzteil (102) oder an der mit diesem Sitzteil (102) fest verbundenen Getriebeeinheit (134) angelenkt ist.

6. Höhenverstelleinrichtung (122, 1220) nach einem der Ansprüche 3 bis 5,
wobei die beiden Höhenverstelleinheiten (129) mittels einer Quertraverse (131) miteinander verbunden sind.

7. Höhenverstelleinrichtung (122, 1220) nach Anspruch 6,
wobei die Quertraverse (131) als eine Motorbrücke (144) ausgebildet ist, die einen mittleren Aufnahmeabschnitt (131.1) zur Aufnahme und Halterung des Motors (128) und zwei daran angrenzende Seitenabschnitte (131.2) zur Aufnahme und Halterung der Wellen (132) aufweist.

8. Höhenverstelleinrichtung (122, 1220) nach Anspruch 7,
wobei die Motorbrücke (144) als ein nach oben hin offenes Profil ausgebildet ist.

9. Fahrzeugsitz (100) mit einer Höhenverstelleinrichtung (122, 1220) nach einem der vorhergehenden Ansprüche.
